# EUROPEAN PATENT APPLICATION

(11) **EP 4 826 227 A1**
(43) Date of publication of application: **21.10.2026**
(21) Application number: 26171347.3
(22) Date of filing: 09.04.2026
(51) Int. Cl.: F01P 7/14, F01P 7/16, F16K 11/085, F16K 27/00, F28F 27/02, F01P 5/10

(54) **COOLING MODULE**

(30) Priority: 14.04.2025 JP 2025066375
(71) Applicant: AISIN CORPORATION, Kariya, Aichi 448-8650 (JP)
(72) Inventor: UCHIYAMA, Yoshinobu, Kariya, Aichi, 448-8650 (JP); KIHARA, Masao, Kariya, Aichi, 448-8650 (JP); SAKURAI, Yu, Kariya, Aichi, 448-8650 (JP); YAMANAKA, Kenji, Kariya, Aichi, 448-8650 (JP)
(74) Representative: Kramer Barske Schmidtchen Patentanwälte PartG mbB

(57) **Abstract**

A cooling module (A) includes: a manifold (M) including a conduit (D) through which a cooling fluid flows, the conduit (D) partially having a bent portion (B), and a housing (H) having a cylindrical valve accommodating portion (21) accommodating a valve rotor (24) rotatably about a central axis (Y). The manifold (M) includes a first manifold portion (M1) having the housing (H) and having one of two conduit parts (30; 30a, 30b) obtained by dividing the conduit (D) into two parts and a second manifold portion (M2) having the other of the two conduit parts (30; 30a, 30b). The one and the other of the conduit parts (30; 30a, 30b) are joined in a direction intersecting the central axis (Y) of the valve accommodating portion (21) to integrate the first manifold portion (M1) and the second manifold portion (M2).

## Description

### TECHNICAL FIELD

The present disclosure relates to a cooling module.

### BACKGROUND DISCUSSION

US 2023/0235832 A discloses a cooling module configured in a box shape in which first and second inner housings (inner housing portions 14a, 14b) and first and second outer housings (outer housing portions 14c, 14d) are overlapped on both sides of a central housing (central housing 12) in which a cylindrical space (cylindrical cavity 54) is formed.

In this cooling module, a valve that controls a flow of a cooling fluid is configured by accommodating a rotor (rotor 64a, 64b) in the cylindrical space. In this cooling module, a flow path is formed by a large number of spaces (cavities 88a to 88q/cavities 96a to 96r and the like) defined by partitions between the central housing, the first and second inner housings, and the first and second outer housings.

In the cooling module described in US 2023/0235832 A, the flow path formed inside the housing has a structure in which a part thereof causes the cooling fluid to flow along the inner surface of the housing. Therefore, there is a portion where the flow path bends at a steep angle, and the pressure loss tends to increase when the cooling fluid flows. In addition, the flow path inside the housing is formed by the spaces defined by the partitions, and there is a possibility that the cooling fluid stagnates at corners or the like of the spaces. In addition, in this cooling module, it is necessary to form the flow path by the large number of spaces defined by the partitions in the box-shaped housing. Therefore, in this cooling module, the flow path cross-sectional area becomes excessively larger than the area required in terms of performance, so that the amount of stored fluid increases and the size of the housing itself increases. As a result, the weight of the cooling module increases. Therefore, there is a possibility that vehicle mountability, fuel cost, and electricity cost deteriorate. As described above, the cooling module described in US 2023/0235832 A may degrade in performance due to pressure loss and weight.

A need thus exists for a cooling module that can suppress performance degradation due to pressure loss and weight.

### SUMMARY

A characteristic configuration of a cooling module according to the present disclosure includes: a manifold including a conduit through which a cooling fluid flows, the conduit partially having a bent portion, and a housing having a cylindrical valve accommodating portion that accommodates a valve rotor rotatably around a central axis, in which the manifold includes a first manifold portion having the housing and having one of two conduit parts obtained by dividing the conduit into two parts and a second manifold portion having the other of the two conduit parts, and the one and the other of the two conduit parts are joined in a direction intersecting the central axis of the cylindrical valve accommodating portion to integrate the first manifold portion and the second manifold portion.

According to the present configuration, the one and the other of the conduit parts are joined in the direction intersecting the central axis of the valve accommodating portion to integrate the first manifold portion and the second manifold portion. As a result, the conduit is formed outside the housing. This conduit has the bent portion, and can construct flow paths having various shapes by forming a gently bent shape or combining a linear shape and a gently bent shape. Therefore, in the cooling module having the present configuration, the degree of freedom in designing a cooling flow path is high, and the flow path with a small pressure loss can be designed. In addition, according to the present configuration, for example, the size of the manifold can be suppressed as compared with a case where the inner space of a box-shaped housing is partitioned by partitions to form a flow path, and an increase in the amount of the cooling fluid can be suppressed. That is, an increase in the amount of fluid stored in the flow path of the housing is suppressed, and an increase in the weight of the cooling module is also suppressed. Therefore, the cooling module that can suppress deterioration in performance due to pressure loss and weight has been configured.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a flow path diagram illustrating an entire cooling system;
Fig. 2 is an exploded perspective view of a cooling module;
Fig. 3 is an exploded perspective view illustrating a first manifold portion and second manifold portions;
Fig. 4 is a front view illustrating a housing and main-body-side conduit parts;
Fig. 5 is a rear view illustrating the housing and main-body-side conduit parts;
Fig. 6 is a plan view of the cooling module after transition from a state in which the first manifold portion and the second manifold portions are separated from each other to a state in which the first manifold portion and the second manifold portions are joined to each other;
Fig. 7 is a cross-sectional plan view of the cooling module including valve accommodating portions and a manifold;
Fig. 8 is a longitudinal sectional side view of the cooling module including the valve accommodating portion and the manifold; and
Fig. 9 is a cross-sectional view illustrating a mold during molding of the cooling module.

### DETAILED DESCRIPTION

Hereinafter, embodiments of a cooling module according to the present disclosure will be described with reference to the drawings. Note that the following embodiments are examples for describing the present disclosure, and the present disclosure is not limited only to these embodiments. Therefore, the present disclosure can be variously modified without departing from the gist of the present disclosure.

### Basic Configuration

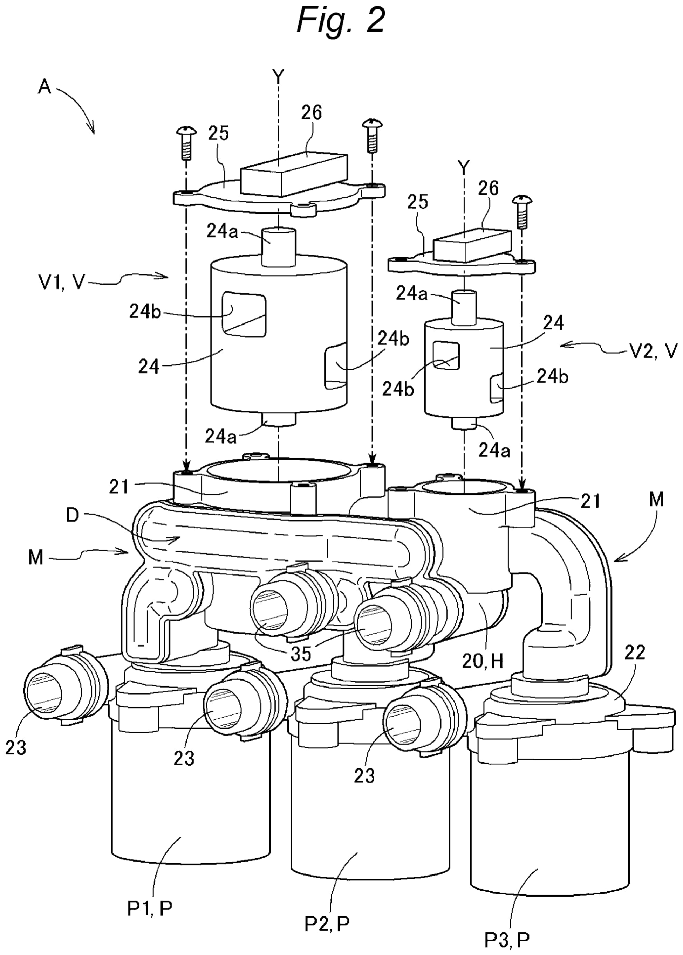

A cooling module A illustrated in Fig. 2 constitutes a part of a cooling system S of a vehicle such as an automobile. The cooling module A enables temperature management of a device mounted on the vehicle and temperature management of a cabin or the like of the vehicle by controlling a flow of a coolant (an example of a cooling fluid).

Note that as the coolant, for example, an antifreeze containing ethylene glycol or the like as a main component or cooling water such as a long life coolant (LLC) is used.

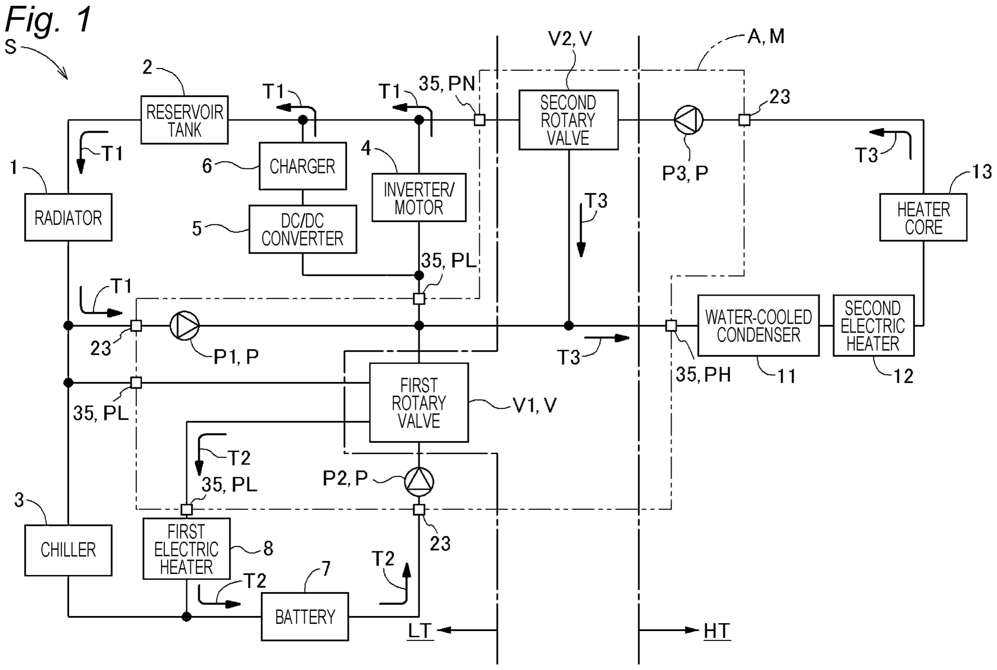

As illustrated in Figs. 1 and 2, the cooling module A supplies and discharges the coolant to and from a plurality of devices in a low-temperature side region LT of the cooling system S, and supplies and discharges the coolant to and from a plurality of devices in a high-temperature side region HT. In order to enable management of the supply and discharge of the coolant, a conduit D on a low-temperature side region LT side (hereinafter, may be referred to as a low-temperature side conduit portion DL) and a conduit D on a high-temperature side region HT side (hereinafter, may be referred to as a high-temperature side conduit portion DH) are provided.

In Fig. 1, the low-temperature side region LT is a region on the left side with respect to the left alternate long and short dash line of the two alternate long and short dash lines illustrated in Fig. 1. The high-temperature side region HT is a region on the right side with respect to the right alternate long and short dash line of the two alternate long and short dash lines illustrated in Fig. 1. Furthermore, the cooling module A is included in a region surrounded by a two-dot chain line.

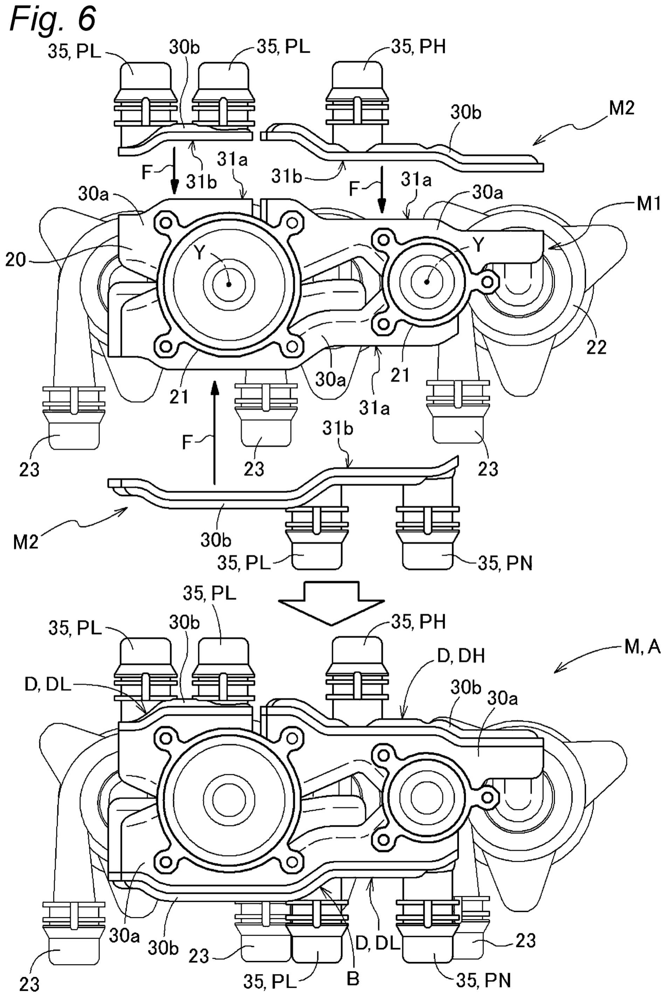

As illustrated in Figs. 2, 3, and 6 to 8, the cooling module A includes a plurality of external ports 35 for supplying and discharging the coolant. Among these external ports 35, an external port 35 connected to the low-temperature side region LT may be referred to as a low-temperature side port PL, and an external port 35 connected to the high-temperature side conduit portion DH may be referred to as a high-temperature side port PH. As illustrated in Figs. 6 to 8, among the external port 35, an external port 35 through which the coolant from the high-temperature side region HT flows to the low-temperature side region LT may be referred to as an intermediate port PN.

Although the cooling module A can be used in an arbitrary posture, the vertical positional relationship, the front-rear positional relationship, and the horizontal positional relationship will be described in accordance with the posture illustrated in Fig. 2. In the cooling module A, the conduits D and a housing H include thermoplastic resin.

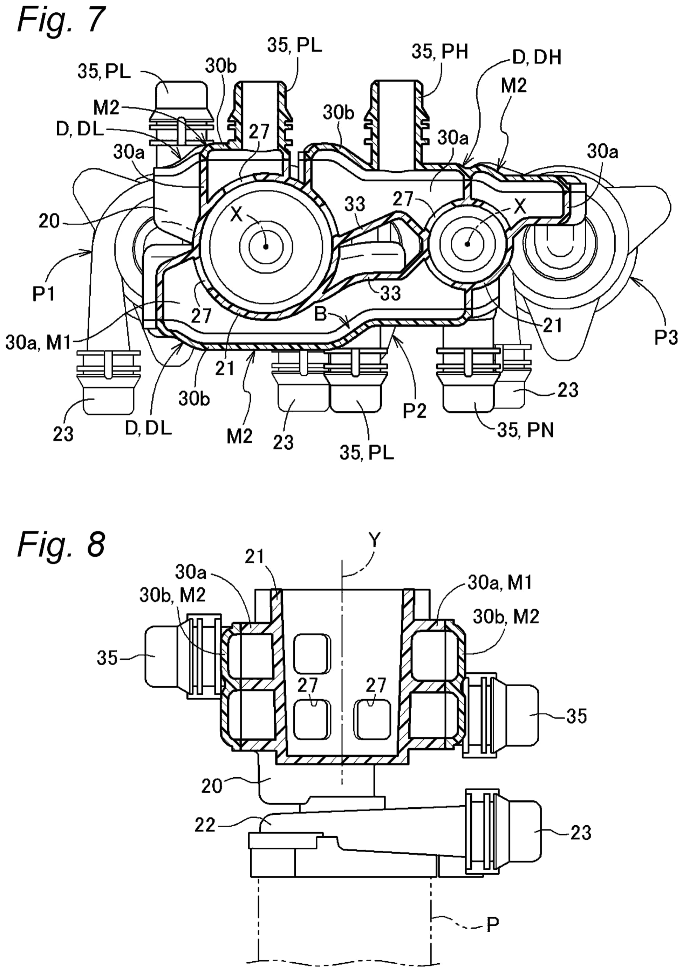

As illustrated in Fig. 2, the cooling module A includes the housing H including rotary valves V (first rotary valve V1, second rotary valve V2), and includes a manifold M including the housing H and the plurality of conduits D (the low-temperature side conduit portions DL illustrated in Fig. 7 and the like, and the high-temperature side conduit portions DH at a lower position) on the housing H. The housing H includes a first water pump P1, a second water pump P2, and a third water pump P3.

The cooling module A includes the first rotary valve V1 and the second rotary valve V2 along the lateral direction of the housing H. Similarly, the cooling module A includes the first water pump P1, the second water pump P2, and the third water pump P3 along the lateral direction at the lower portion of the housing H.

Note that although the cooling module A includes the water pumps P outside the housing H, for example, the cooling module A may include the water pumps P integrally with the housing H.

### Cooling System

As illustrated in Fig. 1, in the cooling system S, on a flow path through which the coolant flows in the low-temperature side region LT, a radiator 1, a reservoir tank 2, and a chiller 3 are provided, and furthermore, an inverter/motor 4, a DC/DC converter 5, a charger 6, a battery 7, and a first electric heater 8, which are devices to be cooled, are provided.

In the cooling system S, on a flow path through which the coolant flows in the high-temperature side region HT, a water-cooled condenser 11, a second electric heater 12, and a heater core 13, which are devices to be cooled, are provided.

In the cooling system S, the radiator 1 cools the coolant, and the reservoir tank 2 stores the coolant. The chiller 3 cools a high-temperature coolant. The inverter/motor 4 includes an inverter that converts direct current into three-phase alternating current and a motor driven by the AC power supplied from the inverter, and the inverter and the motor are cooled by the coolant.

The DC/DC converter 5 has a circuit that converts supplied DC power into DC power of a different voltage, and the charger 6 has a circuit that charges the battery 7. The DC/DC converter 5 and the charger 6 are cooled by the coolant. The battery 7 is a power supply that supplies DC power to the inverter/motor 4. The first electric heater 8 is a heat source that generates heat by energization to increase the temperature of the coolant. The battery 7 and the first electric heater 8 are cooled by the coolant.

The water-cooled condenser 11 reduces the temperature of the coolant in a case where the temperature of the coolant excessively increases. The second electric heater 12 increases the temperature of the coolant. The heater core 13 increases the temperature of the cabin by the heat of the coolant having increased in temperature.

### Cooling Module

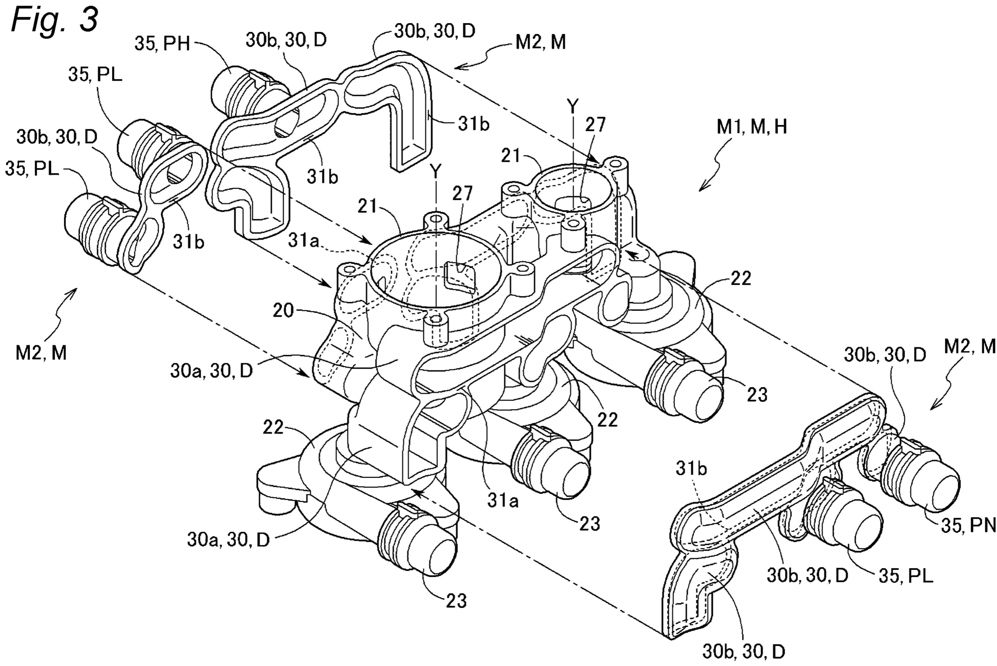

As illustrated in Figs. 2 and 3, the housing H has a housing main body 20, and cylindrical valve accommodating portions 21 constituting the plurality of (two) rotary valves V are integrally formed with the housing main body 20. Further, the housing main body 20 includes pump support portions 22 that are formed at three locations at the lower portion thereof and support the plurality of (three) water pumps P (first water pump P1, second water pump P2, third water pump P3).

The housing main body 20 includes suction ports 23 that supply the coolant to the water pumps P at positions corresponding to the two valve accommodating portions 21. Note although the two cylindrical valve accommodating portions 21 have different diameters, the central axes Y thereof are parallel to each other.

As described above, the housing H includes the housing main body 20, the valve accommodating portions 21, the pump support portions 22, and the suction ports 23. The manifold M includes the housing H and the plurality of conduits D supported by the housing H.

As will be described later, the conduit D has a structure integrated so as to be tubular by joining conduit parts 30 having a two-split structure as illustrated in Figs. 3 to 8. Specifically, the conduit part 30 has a shape obtained by dividing the conduit D into two such that the joint surface is formed along the direction in which the coolant flows. A main-body-side conduit part 30a of the conduit parts 30 is integrally formed with the housing main body 20 and the valve accommodating portion 21 at the time of molding the housing H, and an external-side conduit part 30b is connected to the main-body-side conduit part 30a to form the conduit D.

In the conduit D, as viewed in the direction along the direction in which the coolant flows in the conduit D, the shape of the flow path cross section of the conduit D is formed in a tubular shape, and at least more than 1/2 of the entire circumference of the conduit D is exposed to the outside. Note that part of the outer periphery of part (described later) of the conduit part 30 is integrally formed with the housing main body 20, and the cross-sectional shape of the conduit D is not an independent tubular shape.

### Cooling Module: Manifold

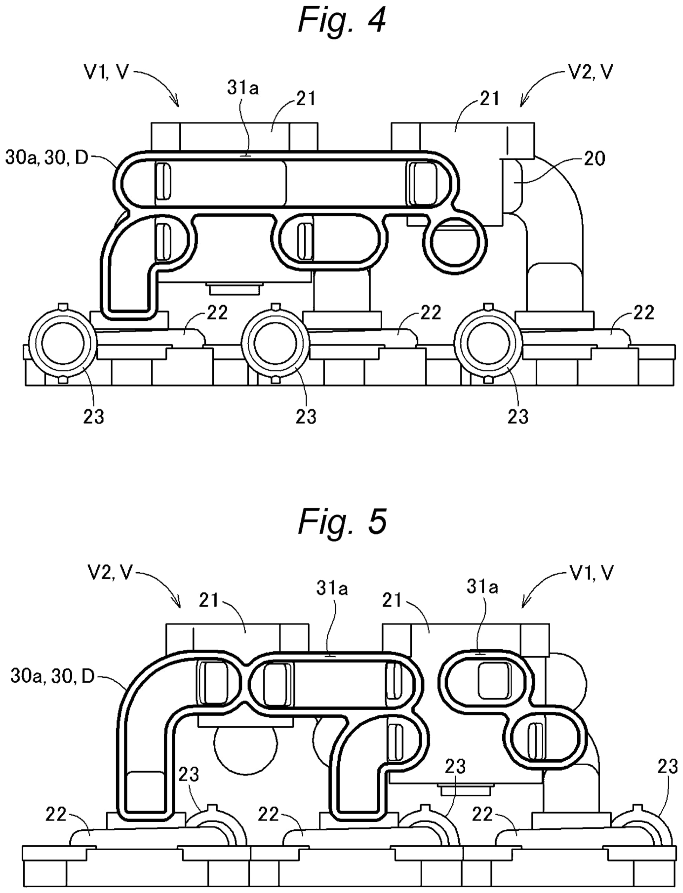

As illustrated in Figs. 4 to 8, the manifold M includes a first manifold portion M1 including the main-body-side conduit parts 30a formed on the front surface and the rear surface of the housing H, and two second manifold portions M2 having external-side conduit parts 30b joined to the main-body-side conduit parts 30a on the front surface and the rear surface.

That is, the main-body-side conduit part 30a formed on the front surface of the first manifold portion M1 and the external-side conduit part 30b formed on one of the two second manifold portions M2 are integrated by being joined in the direction orthogonal to (intersecting) the central axis Y of the valve accommodating portion 21. Relative moving directions of the main-body-side conduit part 30a and the external-side conduit part 30b when the main-body-side conduit part 30a and the external-side conduit part 30b are joined in this manner are referred to as joining directions F.

Similarly, the main-body-side conduit part 30a formed on the rear surface of the first manifold portion M1 and the external-side conduit part 30b formed on the other of the two second manifold portions M2 are integrated by being joined in the direction orthogonal to (intersecting) the central axis Y of the valve accommodating portion 21. In this manner, the manifold M includes the conduits D formed on the front surface and the rear surface of the housing H.

### Cooling Module: Housing

As illustrated in Fig. 2, the rotary valve V includes a valve rotor 24 rotatably fitted into the valve accommodating portion 21 about the vertical central axis Y, a lid-like body 25 that closes an opening in the upper surface of the valve accommodating portion 21, and an electric actuator 26 such as an electric motor that rotates the valve rotor 24.

Although the first rotary valve V1 and the second rotary valve V2 have a common configuration, the valve accommodating portion 21 of the first rotary valve V1 has a larger diameter than that of the valve accommodating portion 21 of the second rotary valve V2.

The valve rotor 24 has a shaft portion 24a protruding vertically, and rotational force of the electric actuator 26 is transmitted to the shaft portion 24a protruding upward. A plurality of openings 24b for flow path control are formed in the outer periphery of the valve rotor 24. The valve accommodating portion 21 has a cylindrical shape centered on the central axis Y, and a plurality of valve ports 27 which each penetrate the valve accommodating portion 21 in a radial direction are formed.

As illustrated in Figs. 7 and 8, the housing main body 20 integrally forms the main-body-side conduit parts 30a so as to communicate with the valve ports 27 outside the two cylindrical valve accommodating portions 21. The housing main body 20 integrally forms a plurality of partition walls 33 at an intermediate portion between the outer peripheries of the two valve accommodating portions 21.

### Mold Molding of Housing

The housing H is manufactured by resin molding using a mold. That is, as illustrated in Figs. 7 to 9, the housing main body 20, the two cylindrical valve accommodating portions 21, the plurality of partition walls 33, and the main-body-side conduit parts 30a are integrally formed at the same time by the mold. In particular, during this molding, the plurality of valve ports 27 are molded in the valve accommodating portion 21.

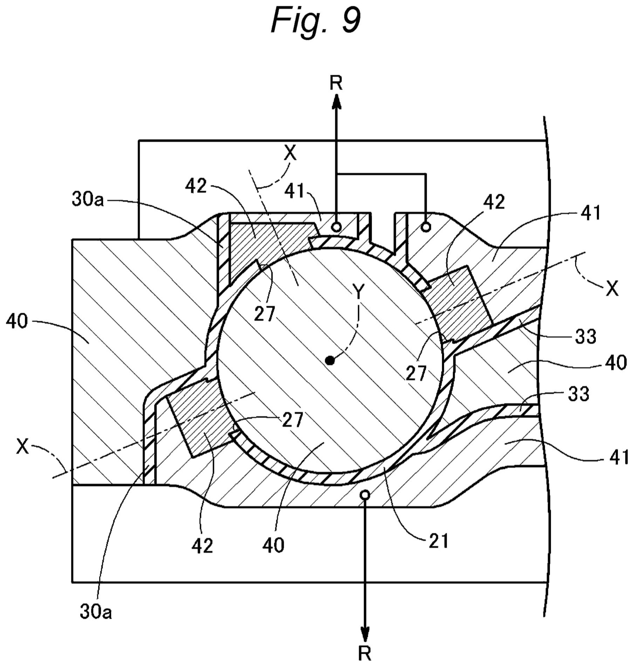

Specifically, as illustrated in Fig. 9, fixed molds 40 forming the housing main body 20 and movable molds 41 movable with respect to the fixed molds 40 are used. In particular, the movable molds 41 include a plurality of port molds 42 (nests) to form the plurality of valve ports 27.

With such a configuration of the mold, a molded product (housing H, first manifold portion M1) is obtained by filling a cavity between the fixed molds 40 and the movable molds 41 with a molten resin, moving the movable molds 41 in the directions indicated by arrows as separation directions R in Fig. 9 after solidification of the resin, separating the port molds 42, and removing the solid resin from the fixed molds 40.

The separation direction R illustrated in Fig. 9 is opposite to the direction in which the external-side conduit part 30b moves when the external-side conduit part 30b is joined to the main-body-side conduit part 30a (joining direction F illustrated in Fig. 6), but the movement flow lines of them are parallel to each other.

The port mold 42 is positioned with respect to the movable mold 41 and is separable from the movable mold 41. After the movable mold 41 is separated from the fixed mold 40, the port mold 42 is left in the mold while being fitted to the valve port 27 in the valve accommodating portion 21. Therefore, the port mold 42 is separated from the molded product in a predetermined step.

The main-body-side conduit part 30a formed integrally with the housing main body 20 is formed as the first manifold portion M1, and the main-body-side conduit part 30a communicates with the valve port 27. As illustrated in Fig. 9, the valve port 27 has an opening edge in a posture along a port axis X extending in a radial direction with the central axis Y of the valve accommodating portion 21 as the center as viewed in the direction along the central axis Y.

Since the port axis X of each of the plurality of valve ports 27 is not parallel to the separation direction R, the port mold 42 is provided to be movable along the separation direction R (parallel to the joining direction F) so as to be separable along the port axis X. As a result, the valve port 27 is appropriately formed along the radial direction of the valve accommodating portion 21 regardless of the extraction direction of the mold at the time of molding using the mold.

In particular, at least one of the port axes X of the plurality of valve ports 27 is in a positional relationship of not intersecting the first manifold portion M1 outside the valve accommodating portion 21. As described above, in a case where the port axis X and the first manifold portion M1 are in a positional relationship of not intersecting each other, the movable mold 41 is separated from the fixed mold 40, and then, the port mold 42 is moved in the direction along the port axis X, so that the port mold 42 can be separated without coming into contact with the main-body-side conduit part 30a of the first manifold portion M1.

As described above, the configuration in which the port molds 42 are disposed outside the valve accommodating portion 21 to form the housing main body 20 can reduce the diameter of the valve accommodating portion 21 as compared with the configuration in which the "nests" are disposed inside the space forming the valve accommodating portion 21.

Note that, in a molding means for performing molding by setting hole forming molds as "nests" for forming the valve ports 27 inside the cylindrical valve accommodating portion 21, it is necessary to secure space for taking out the hole forming molds after molding inside the valve accommodating portion 21. For this reason, the diameter of the valve accommodating portion 21 is increased.

On the other hand, in a case where the port molds 42 are set in the movable mold 41 as illustrated in Fig. 9, it is not necessary to consider the diameter of the valve accommodating portion 21, and as a result, the diameter of the valve accommodating portion 21 can be reduced, and the entire cooling module A is downsized.

The fixed molds 40, the movable molds 41, and the port molds 42 illustrated in Fig. 9 illustrate the concept of the mold, and the configuration and shape of the mold are not limited thereto. In addition, it is assumed that the port mold 42 attachable to and detachable from the movable mold 41 is configured to be positioned by being fitted to the movable mold 41, for example, but it is also conceivable to adopt a configuration other than this. Although not illustrated in the drawing, the second manifold portion M2 including the external-side conduit parts 30b is also formed by mold molding of a thermoplastic resin.

### Cooling Module: Conduits and External Ports

The plurality of conduits D are disposed in a positional relationship of being distributed to the front surface side and the rear surface side of the housing main body 20 with respect to the peripheries of the valve accommodating portions 21 on the housing H.

As illustrated in Figs. 6 and 7, among the plurality of conduits D, a conduit through which the coolant whose flow is controlled by the first rotary valve V1 flows is the low-temperature side conduit portion DL, and a conduit through which the coolant whose flow is controlled by the second rotary valve V2 flows is the high-temperature side conduit portion DH.

Two external ports 35 are provided so as to protrude from the conduits D formed on the front surface side of the housing main body 20, and three external ports 35 are provided so as to protrude from the conduits D formed on the rear surface side of the housing H.

As illustrated in Figs. 6 and 7, of the two external ports 35 on the front surface side of the housing main body 20, the external port 35 communicating with the low-temperature side conduit portion DL is the low-temperature side port PL, and the external port 35 communicating with the high-temperature side conduit portion DH is the high-temperature side port PH.

Among the three external ports 35 on the rear surface side of the housing main body 20, two external ports 35 communicating with the low-temperature side conduit portions DL are the low-temperature side ports PL, and one external port 35 communicating with the high-temperature side conduit portion DH is the high-temperature side port PH.

Similarly, among the conduits D formed on the front surface side and the rear surface side of the housing main body 20, the conduit communicating with the external port 35 as the low-temperature side port PL is the low-temperature side conduit portion DL, and a conduit communicating with the external port 35 as the high-temperature side port PH is the high-temperature side conduit portion DH.

The conduit D has a structure in which the conduit parts 30 having a two-split structure divided into two along the flow direction of the coolant are connected. In particular, the conduit part 30 provided on the housing main body 20 may be referred to as the main-body-side conduit part 30a, and the conduit part 30 joined from the outside may be referred to as the external-side conduit part 30b.

A main-body-side joint surface 31a of the main-body-side conduit part 30a may partially have a gently curved portion as illustrated in Fig. 6 or may partially have a simple straight portion in plan view as viewed in the direction along the central axis Y. Note that the main-body-side joint surface 31a may be formed entirely as a gentle curve or entirely as a straight line in plan view. Note that, in the case where the entire main-body-side joint surface 31a is formed as a straight line, the main-body-side joint surface 31a is formed in a region along a flat surface.

Correspondingly, on the external-side conduit part 30b, an external-side joint surface 31b is set so as to be able to be joined to the main-body-side joint surface 31a in a close contact state.

As a result, when the main-body-side conduit part 30a and the external-side conduit part 30b are joined, the main-body-side joint surface 31a and the external-side joint surface 31b face each other, a plate-shaped infrared heater or the like is disposed in the middle of them to heat them. After it is confirmed that the resin on the surfaces of the main-body-side joint surface 31a and the external-side joint surface 31b has exceeded the melting temperature, the infrared heater or the like is removed, and the main-body-side joint surface 31a and the external-side joint surface 31b are joined in a manner in which pressure is applied in the directions indicated by the arrows as the joining directions F.

The joining directions F at the time of performing this joining are directions orthogonal to the central axis Y of the valve accommodating portion 21, and reliable crimping is realized by applying pressure in the directions. Note that the joining direction F may be a posture slightly inclined with respect to the central axis Y (posture intersecting the central axis Y).

### Cooling System

As illustrated in Figs. 6 and 7, in the cooling module A, on one side (front surface side in Figs. 6 and 7) of the housing H, the external port 35 for supplying and discharging the coolant to and from the low-temperature side region LT is set as the low-temperature side port PL, and the low-temperature side conduit portion DL connecting the low-temperature side port PL and the second rotary valve V2 is disposed.

In the cooling module A, on the one side (front surface side in Figs. 6 and 7) of the housing H, the plurality of low-temperature side conduit portions DL for supplying and discharging the coolant to and from the low-temperature side region LT are formed, and the low-temperature side conduit portion DL connecting the low-temperature side conduit portions DL and the second rotary valve V2 is disposed.

In the cooling module A, on the other side (rear surface side in Figs. 6 and 7) of the housing H, the plurality of high-temperature side conduit portions DH for supplying and discharging the coolant to and from the high-temperature side region HT are formed, and the high-temperature side conduit portion DH connecting the high-temperature side conduit portions DH and the first rotary valve V1 is disposed.

As illustrated in Figs. 6 and 7, the manifold M includes the external ports 35 through which the first water pump P1, the second water pump P2, and the third water pump P3 suck the coolant. In the manifold M, the three external ports 35 that feed the coolant from the first rotary valve V1 to the devices in the low-temperature side region LT are the low-temperature side ports PL.

In the manifold M, the external port 35 that feeds the coolant from the second rotary valve V2 to the devices in the high-temperature side region HT is the high-temperature side port PH. Furthermore, in the manifold M, the external port 35 that feeds the coolant from the second rotary valve V2 to the devices in the low-temperature side region LT is the intermediate port PN.

### Cooling System: Circulation Mode

As illustrated in Fig. 1, the cooling system S can be controlled in a first circulation mode in which the coolant is circulated in a first circulation path T1 on the flow path by driving the first water pump P1. In the first circulation mode, the coolant in the flow path is sucked from the suction port 23 of the first water pump P1, and is supplied to the first circulation path T1 from the external port 35 as the low-temperature side port PL in the manifold M.

In addition, the cooling system S can be controlled in a second circulation mode in which the coolant is circulated in a second circulation path T2 on the flow path by driving the second water pump P2. In the second circulation mode, the coolant in the flow path is sucked from the suction port 23 of the second water pump P2, and the coolant is supplied from the first rotary valve V1 to the external port 35 as the low-temperature side port PL in the manifold M, and is supplied from the external port 35 to the second circulation path T2.

Furthermore, the cooling system S can be controlled in a third circulation mode in which the coolant is circulated in a third circulation path T3 on the flow path by driving the third water pump P3. In the third circulation mode, the coolant in the flow path is sucked from the suction port 23 of the third water pump P3, and the coolant is supplied from the second rotary valve V2 to the external port 35 as the high-temperature side port PH in the manifold M, and is supplied from the external port 35 to the third circulation path T3.

The cooling system S can also independently control circulation of the coolant in the first circulation mode, circulation of the coolant in the second circulation mode, and circulation of the coolant in the third circulation mode.

In the cooling system S, for example, as in a case where a relatively large current is supplied to the inverter/motor 4 for a long time, the temperature of the cooling system S may be higher than a set temperature due to a rise in the temperature of the inverter/motor 4, the DC/DC converter 5, the charger 6, and the battery 7.

In such a situation, control is performed such that the radiator 1 radiates heat by causing the coolant to flow through the first circulation path T1, and at the same time, the water-cooled condenser 11 radiates heat by causing the coolant to flow through the third circulation path T3, and some of the coolant is supplied to the chiller 3.

In this control, the first water pump P1, the second water pump P2, and the third water pump P3 are driven in a state where no current is supplied to the second electric heater 12 on the third circulation path T3, and the first rotary valve V1 is set to a position where the coolant is supplied to the chiller 3. In particular, the second rotary valve V2 is set to a position to directly supply the coolant having flowed through the third circulation path T3 to the first circulation path T1 by supplying the coolant to the external port 35 as the intermediate port PN.

### Operation and Effect of Embodiment

As illustrated in Figs. 2 and 3, the cooling module A is configured as the manifold M in which the tubular conduits D are formed on the housing H having the first rotary valve V1 and the second rotary valve V2. For this reason, for example, as compared with a case where the inner space of a box-shaped housing is partitioned by partitions to form a flow path, not only the size of the cooling module A can be reduced, but also an increase in the amount of the coolant is suppressed, an increase in the weight of the cooling module A including the coolant is suppressed, and a decrease in thermal efficiency is not caused.

Here, in a case where one of the conduit parts 30 (external-side conduit part 30b) that the second manifold portion M2 includes is joined to the other of the conduit parts 30 (main-body-side conduit part 30a) that the first manifold portion M1 includes to form the conduit D, for example, it is also conceivable to join the two conduit parts 30 by being relatively displaced so as to approach each other along the vertical direction.

In such joining, it is necessary to set the joint surface of the conduit part 30 (main-body-side conduit part 30a) that the first manifold portion M1 includes upward and set the joint surface of the conduit part 30 (external-side conduit part 30b) that the second manifold portion M2 includes downward.

However, in a case where the joint surface of the conduit part 30 (main-body-side conduit part 30a) is set to be upward as described above, in the structure in which the upper end of the valve accommodating portion 21 protrudes upward from the joint surface, for example, in a case where a jig or the like is moved along the central axis Y of the valve accommodating portion 21 in a state where the housing H is supported by the jig or the like, it could be assumed that the jig or the like comes into contact with the upper end of the valve accommodating portion 21 and the joining becomes difficult.

In addition, in order to avoid such inconvenience, equipment required for joining becomes complicated, for example, the size of the jig or the like needs to be downsized, and it is difficult to use a relatively large device having high versatility for performing joining.

On the other hand, as described in the embodiment, in a case where the two conduit parts 30 are relatively displaced so as to approach each other along the direction intersecting the central axis Y to perform the joining, even if one end portion of the valve accommodating portion 21 in the direction along the central axis Y protrudes, a jig or the like that supports the external-side conduit part 30b does not come into contact with the protruding portion of the valve accommodating portion 21 of the housing H at the time of joining. As described above, even in a form in which the valve accommodating portion 21 protrudes upward from the housing H, smooth joining can be performed, and a relatively large device having high versatility can be used.

In the cooling module A, the one housing H includes the dedicated first rotary valve V1 that manages supply and discharge of the coolant to and from the low-temperature side region LT, and the dedicated second rotary valve V2 that manages supply and discharge of the coolant to and from the high-temperature side region HT.

In the cooling module A, the first rotary valve V1 and the second rotary valve V2 are disposed at positions relatively separated from each other. In the housing H, the flow of the coolant supplied to the low-temperature side region LT is managed only in the vicinity of the first rotary valve V1, and the flow of the coolant supplied to the high-temperature side region HT is managed only in the vicinity of the second rotary valve V2. As a result, unnecessary heat exchange is not performed between the coolant to be supplied to the high-temperature side region HT and the coolant to be supplied to the low-temperature side region LT, and high thermal efficiency is enabled.

In addition, as described in the embodiment, in the case where the main-body-side conduit part 30a is integrally formed on the housing main body 20 by using the mold, the port molds 42 are used together with the movable mold 41 used to form the main-body-side conduit part 30a. Therefore, it is not necessary to dispose "nests" such as hole forming molds for forming the valve ports 27 in a portion forming the internal space of the valve accommodating portion 21.

Note that in the molding form in which the "nests" are disposed in the internal space of the valve accommodating portion 21, the diameter of the valve accommodating portion 21 is increased in order to secure spaces for enabling the "nests" such as the hole forming molds to be taken out after molding. However, in the configuration of the mold described in the embodiment, the diameter of the valve accommodating portion 21 is not increased, and the entire cooling module A is downsized.

### Other Embodiments

The present disclosure may be configured as follows in addition to the above-described embodiment (components having the same functions as those of the embodiment are denoted by the same numbers and reference signs as those of the embodiment).
(a) A cooling module A includes a conduit D only on the front surface of a housing H, for example. That is, instead of the configuration in which the conduit D is formed on each of the front surface and the rear surface of the housing H as described in the embodiment, it is conceivable that a main-body-side conduit part 30a is provided only on one side of the housing H to form a first manifold portion M1, and an external-side conduit part 30b of a second manifold portion M2 is joined to the main-body-side conduit part 30a.

As a modification of the other embodiment (a), for example, it is also conceivable that the shape of the housing H is formed in a rectangular shape in plan view, the main-body-side conduit part 30a of a conduit part 30 is formed on each of the four sides of the housing H to form the first manifold portion M1, and the external-side conduit parts 30b of the second manifold portions M2 are joined to the main-body-side conduit parts 30a in directions intersecting a central axis Y of a valve accommodating portion 21.
(b) It is also conceivable that in a cooling module A, a housing H includes three or more rotary valves V. As a result, a conduit D through which a coolant flows can be appropriately selected and the coolant can be supplied and discharged even when the number of devices to which the coolant is supplied and from which the coolant is discharged is large. In particular, as described as the modification of the other embodiment (a), for example, in a case where the conduits D are provided on the four sides of the housing H, the coolant is supplied and discharged individually to and from a large number of devices, thereby highly accurate temperature adjustment is enabled.
(c) A manifold M includes a low-temperature side conduit portion DL as a conduit D for supplying and discharging a coolant to and from a low-temperature side region LT on one (for example, the front surface) of the surfaces with a housing H interposed therebetween, and a high-temperature side conduit portion DH as a conduit D for supplying and discharging the coolant to and from a high-temperature side region HT on the other (for example, the rear surface) of the surfaces with the housing H interposed therebetween. Note that in this configuration, an external port 35 functioning as a low-temperature side port PL for the low-temperature side conduit portion DL is provided, and an external port 35 functioning as a high-temperature side port PH for the high-temperature side conduit portion DH is provided.

By configuring the manifold M in this manner, in a cooling module A, the distance between the low-temperature side conduit portion DL disposed on one side and the high-temperature side conduit portion DH disposed on the other side with the housing H interposed therebetween can be increased, the region where the portion where the low-temperature coolant flows and the portion where the high-temperature coolant flows are in contact with each other can be reduced, the loss of heat due to heat conduction can be reduced, and handling of a flow path for supplying and discharging the coolant to and from the low-temperature side region LT and a flow path for supplying and discharging the coolant to and from the high-temperature side region HT is facilitated.

Note that the cooling module A may include a configuration in which not all of the conduits for supplying and discharging the coolant to and from the low-temperature side region LT are disposed on one side, but some of the conduits for supplying and discharging the coolant to and from the low-temperature side region LT are disposed in the high-temperature side region HT.
(d) A second manifold portion M2 is configured such that an external-side conduit part 30b includes an electromagnetic on-off valve or an electromagnetic flow rate control valve. That is, the second manifold portion M2 is integrated with a first manifold portion M1 (including a housing H) in a form of joining the external-side conduit part 30b to a main-body-side joint surface 31a. Therefore, even in a case where a valve or the like for controlling the flow of a coolant is required or in a case where the number of external ports 35 is increased, the performance can be changed only by using the second manifold portion M2 having a different configuration without changing the basic design.

As a result, for example, even in a case where the performance of the device to which the coolant is supplied and from which the coolant is discharged is different for each vehicle type, by merely joining the second manifold portion M2 corresponding to the required performance to the first manifold portion M1, a conduit D can be formed, and the required performance can be realized without changing the configuration of a rotary valve V or the like of the housing H. It is not necessary to change the design of the cooling module A for each vehicle type.
(e) As partially described in the embodiment, a joint surface of a conduit part 30 obtained by dividing a conduit D into two may be, for example, a curved line or a straight line as viewed in the direction along a central axis Y. The joint surface is not limited to a joint surface formed in a posture parallel to the central axis Y, and may be inclined. In addition, the joint surface may have a shape obtained by combining a gently bending shape, a linear shape, and a gently bending shape. Furthermore, the two-divided structure of the conduit D is not limited to the structure in which the flow path cross-sectional area of the conduit D is equally divided into two, and for example, the flow path cross-sectional area of a main-body-side conduit part 30a may be set to be larger than a flow path cross-sectional area of an external-side conduit part 30b, or may be set in the reverse relationship.
(f) It is not necessary to set the cross-sectional shape of the flow path of a conduit D to be equal over the entire length in the direction in which a coolant flows (the longitudinal direction of the conduit D). For example, it is conceivable to increase the flow path cross-sectional area of a curved portion to be larger than the flow path cross-sectional area of a linear portion in the conduit D. By increasing the flow path cross-sectional area of the curved portion in this manner, an increase in the flow path resistance of the conduit D can be suppressed and the performance of a cooling module A can be maintained in a high state.
(g) As a joining form of a conduit part 30, heat welding using frictional heat due to vibration may be adopted in addition to heat welding using infrared rays. Further, the joining form of the conduit part 30 may be adhesion using an adhesive.

Note that the configuration disclosed in the above embodiment (including the other embodiments, the same applies hereinafter) can be applied in combination with the configuration disclosed in another embodiment as long as there is no contradiction, and the embodiments disclosed in the present specification are examples, and the embodiments of the present disclosure are not limited thereto, and can be appropriately modified without departing from the object of the present disclosure.

In the above-described embodiments, the following configurations are conceived.
(1) A cooling module A including: a manifold M including a conduit D through which a coolant (cooling fluid) flows, the conduit D partially having a bent portion B, and a housing H having a cylindrical valve accommodating portion 21 that accommodates a valve rotor 24 rotatably around a central axis Y, in which the manifold M includes a first manifold portion M1 having the housing H and having one of two conduit parts 30 obtained by dividing the conduit D into two parts and a second manifold portion M2 having the other of the two conduit parts 30, and the one and the other of the two conduit parts 30 are joined in a direction intersecting the central axis Y of the cylindrical valve accommodating portion 21 to integrate the first manifold portion M1 and the second manifold portion M2.

According to this, the one and the other of the conduit parts 30 are joined in the direction intersecting the central axis Y of the valve accommodating portion 21 to integrate the first manifold portion M1 and the second manifold portion M2. As a result, the conduit D is formed outside the housing H. This conduit D has the bent portion B, and can construct flow paths having various shapes by forming a gently bent shape or combining a linear shape and a gently bent shape. Therefore, in the cooling module A having the present configuration, the degree of freedom in designing a cooling flow path is high, and the flow path with a small pressure loss can be designed. In addition, according to the present configuration, for example, the size of the manifold M can be suppressed as compared with a case where the inner space of a box-shaped housing is partitioned by partitions to form a flow path, and an increase in the amount of the coolant can be suppressed. That is, an increase in the amount of fluid stored in the flow path of the housing is suppressed, and an increase in the weight of the cooling module A is also suppressed.

(2) In the cooling module A of (1), the conduit D is preferably disposed around the cylindrical valve accommodating portion 21 of the housing H.

With this configuration, in a state where the valve rotor 24 is accommodated in the valve accommodating portion 21 to form a rotary valve V, the conduit D is disposed at a position close to the rotary valve V. Therefore, the conduit D is shortened and the coolant can be supplied and discharged.

(3) In the cooling module A of (1) or (2), the one of the two conduit parts 30 that the first manifold portion M1 has preferably communicates with a plurality of valve ports 27 that penetrate from the inner periphery to the outer periphery of the cylindrical valve accommodating portion 21, and at least one of the plurality of valve ports 27 preferably has a port axis X along a radial direction of the cylindrical valve accommodating portion 21, the port axis X not intersecting the first manifold portion M1 outside the cylindrical valve accommodating portion 21 as viewed in the direction along the central axis Y.

According to this, at least one of the plurality of valve ports 27 has the port axis X that does not intersect an external-side conduit part 30b of the first manifold portion M1. By setting the port axis X in this manner, for example, when the first manifold portion M1 having the housing H is molded with a mold and the valve port 27 is molded with a dedicated mold (for example, a nest), the dedicated mold (for example, the nest) for forming the valve port 27 can be removed along a direction parallel to the port axis X after a mold (for example, a movable mold) is removed. Therefore, this removal step can be easily performed.

(4) In the cooling module A according to any one of (1) to (3), the conduit D preferably includes two types of conduit portions including a low-temperature side conduit portion DL through which the coolant at a set temperature flows and a high-temperature side conduit portion DH through which the coolant at a temperature higher than the set temperature flows, the first manifold portion M1 preferably includes the one of the two conduit parts 30 that constitute the low-temperature side conduit portion DL and the one of the two conduit parts 30 that constitute the high-temperature side conduit portion DH, the second manifold portion M2 preferably includes two of the second manifold portions M2 including the second manifold portion M2 on a low-temperature side including the other of the two conduit parts 30 that constitute the low-temperature side conduit portion DL and the second manifold portion M2 on a high-temperature side including the other of the two conduit parts 30 that constitute the high-temperature side conduit portion DH, the one and the other of the two conduit parts 30 that constitute the low-temperature side conduit portion DL are preferably joined in the direction intersecting the central axis Y to integrate the first manifold portion M1 and the second manifold portion M2 on the low-temperature side, and the one and the other of the two conduit parts 30 that constitute the high-temperature side conduit portion DH are preferably joined in the direction intersecting the central axis Y to integrate the first manifold portion M1 and the second manifold portion M2 on the high-temperature side.

Accordingly, the low-temperature side conduit portion DL, which is the conduit D through which the low-temperature coolant flows, and the high-temperature side conduit portion DH, which is the conduit D through which the high-temperature coolant flows, can be formed on the housing H. Since the low-temperature side conduit portion DL and the high-temperature side conduit portion DH that are formed on the housing H can form the conduits D independent from each other, the coolants in these conduits D do not mix with each other, and the coolant at the set temperature can be supplied to the low-temperature side region LT and the coolant at a temperature higher than the set temperature can be supplied to the high-temperature side region HT.

The present disclosure can be utilized in a cooling module.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A cooling module (A) comprising:
a manifold (M) including a conduit (D) through which a cooling fluid flows, the conduit (D) partially having a bent portion (B), and a housing (H) having a cylindrical valve accommodating portion (21) that accommodates a valve rotor (24) rotatably around a central axis (Y),
wherein the manifold (M) includes a first manifold portion (M1) having the housing (H) and having one of two conduit parts (30; 30a, 30b) obtained by dividing the conduit (D) into two parts and a second manifold portion (M2) having another of the two conduit parts (30; 30a, 30b), and
the one and the another of the two conduit parts (30; 30a, 30b) are joined in a direction intersecting the central axis (Y) of the cylindrical valve accommodating portion (21) to integrate the first manifold portion (M1) and the second manifold portion (M2).

2. The cooling module (A) according to Claim 1, wherein the conduit (D) is disposed around the cylindrical valve accommodating portion (21) of the housing (H).

3. The cooling module (A) according to Claim 1 or 2,
wherein the one of the two conduit parts (30; 30a, 30b) that the first manifold portion (M1) has communicates with a plurality of valve ports (27) that penetrate from an inner periphery to an outer periphery of the cylindrical valve accommodating portion (21), and
at least one of the plurality of valve ports (27) has a port axis (X) along a radial direction of the cylindrical valve accommodating portion (21), the port axis (X) not intersecting the first manifold portion (M1) outside the cylindrical valve accommodating portion (21) as viewed in a direction along the central axis (Y).

4. The cooling module (A) according to any one of Claims 1 to 3,
wherein the conduit (D) includes two types of conduit portions including a low-temperature side conduit portion (DL) through which the cooling fluid at a set temperature flows and a high-temperature side conduit portion (DH) through which the cooling fluid at a temperature higher than the set temperature flows,
the first manifold portion (M1) includes the one of the two conduit parts (30; 30a, 30b) that constitute the low-temperature side conduit portion (DL) and the one of the two conduit parts (30; 30a, 30b) that constitute the high-temperature side conduit portion (DH),
the second manifold portion (M2) includes two of the second manifold portions (M2) including the second manifold portion (M2) on a low-temperature side including the another of the two conduit parts (30; 30a, 30b) that constitute the low-temperature side conduit portion (DL) and the second manifold portion (M2) on a high-temperature side including the another of the two conduit parts (30; 30a, 30b) that constitute the high-temperature side conduit portion (DH),
the one and the another of the two conduit parts (30; 30a, 30b) that constitute the low-temperature side conduit portion (DL) are joined in the direction intersecting the central axis (Y) to integrate the first manifold portion (M1) and the second manifold portion (M2) on the low-temperature side, and
the one and the another of the two conduit parts (30; 30a, 30b) that constitute the high-temperature side conduit portion (DH) are joined in the direction intersecting the central axis (Y) to integrate the first manifold portion (M1) and the second manifold portion (M2) on the high-temperature side.
